# FASCICULE DE BREVET EUROPEEN

(11) **EP 2 824 625 B1**
(45) Date de publication et mention de la délivrance du brevet: **17.02.2021**
(21) Numéro de dépôt: 14176043.9
(22) Date de dépôt: 08.07.2014
(51) Int. Cl.: G06Q 20/02, G06Q 20/20, G06Q 20/32

(54) **Méthode de réalisation de transaction, terminal et programme d'ordinateur correspondant**
Methode zur Ausführung einer Transaktion, Endgerät und entsprechendes Computerprogramm
Method for conducting a transaction, corresponding terminal and computer program

(30) Priorité: 11.07.2013 FR 1356839; 20.12.2013 FR 1363300
(43) Date de publication de la demande: 14.01.2015
(73) Titulaire: Ingenico Group, 75015 Paris (FR)
(72) Inventeur: Leger, Michel, 78100 Saint-Germain-en-Laye (FR)
(74) Mandataire: Vidon Brevets & Stratégie

(56) Documents cités:
- EP-A1- 2 128 809
- WO-A2-01/63375
- US-A1- 2002 116 329
- US-A1- 2012 136 798

## Description

### 1. Domaine de l'invention

L'invention se rapporte au domaine des instruments de paiement. Plus particulièrement, l'invention se rapporte à un nouvel instrument de paiement.

### 2. Art Antérieur

L'histoire du paiement est relativement ancienne. Depuis que la monnaie existe, la manière dont cette monnaie peut être échangée pour réaliser un paiement a été au cœur des préoccupations. De nombreux instruments de paiement ont ainsi été créés : la monnaie fiduciaire, en premier lieu, puis des instruments de change et de crédit, comme la lettre de change, le chèque. Plus récemment, la carte bancaire a progressivement révolutionné la manière dont les paiements sont réalisés. Cette révolution tient principalement à la miniaturisation et aux capacités de traitement des processeurs.

On est en effet passé de l'usage de simples cartes à bande magnétique, contenant des données mais n'étant pas en mesure de traiter de l'information, à des cartes à puces comprenant un processeur et de la mémoire.

En revanche, les principes de paiement, en eux même, ont relativement peu évolué par rapport à l'évolution des techniques mises en œuvre pour réaliser ces paiements. Ainsi, par exemple, pour ce qui est du paiement par carte bancaire, l'utilisateur dispose d'une carte et le commerçant d'un terminal de paiement qui est utilisé pour lire des données de carte et vérifier l'identité du porteur de carte (ou à tout le moins que le porteur de carte connaisse les informations permettant de valider le paiement). Bien que les techniques d'identification, de reconnaissance, de détection de cartes ont évolué, il est toujours nécessaire que l'utilisateur dispose d'un identifiant bancaire qu'il présente au commerçant, charge à celui-ci de disposer des infrastructures nécessaires à l'authentification de l'utilisateur et au passage de transactions auprès des services bancaires adéquat. Or, ces infrastructures d'une part sont couteuses et d'autres part comprennent des données extrêmement sensibles, comme par exemple des identifiants bancaires « de tous les utilisateurs de ce terminal » dont la compromission peut avoir des conséquences autrement plus graves que celles qui sont liées à l'utilisation non autorisée de données bancaires que d'un seul client (par exemple un vol de numéro de carte bancaire). Pour tenter de se préserver des compromissions ou vols au niveau du commerçant, les terminaux utilisés par ceux-ci sont de plus en plus sophistiqués et bardés de mesures de sécurité. Or, bien que ces mesures soient efficaces, il n'en demeure pas moins que des failles existent toujours.

Il est donc nécessaire de proposer des solutions qui permettent de résoudre ces problèmes liés au risque de compromission des données du commerçant.

Le document US 2002/116329 A1 concerne un système permettant à un terminal sans fil d'exécuter les transactions de débit/crédit d'un compte. Selon US 2002/116329 A1, le système concerne trois parties : un commerçant, un client et une entité d'autorisation (serveur d'autorisation). Aucun des procédés divulgués par US 2002/116329 A1 n'enseigne l'obtention de l'identifiant de commerçant par l'intermédiaire d'un code à barre en deux dimensions, obtenu par le terminal de l'utilisateur.

Le document US 2012/136798 A1 concerne un système de transaction de paiement, dans lequel les informations bancaires de l'utilisateur sont transmises à un serveur au lieu d'un commerçant. En effet, US 2012/136798 A1 divulgue que le serveur transmet le numéro de carte bancaire au commerçant pour traiter la commande, et ne résout pas les problèmes liés au risque de compromission des données du client.

Le document EP 2 128 809 A1 concerne une méthode de génération d'une transaction entre un terminal d'un acheteur (second entity) et le terminal d'un commerçant (first entity) sous le contrôle d'une troisième entité (server). La deuxième entité (qui correspond au terminal de l'acheteur) contacte la première entité (le terminal de paiement du commerçant ou du fournisseur de service). La deuxième entité transmet un message à la première entité. La deuxième entité reçoit le code d'identification de la première entité via une communication unidirectionnelle et extrait les informations relatives à la transaction à effectuer à partir du code. En revanche, EP 2 128 809 A1 nécessite la transmission, de message et donc l'échange bidirectionnel d'information.

### 3. Résumé de l'invention

L'invention ne présente pas ces inconvénients des solutions de l'art antérieur. L'invention est définie par l'objet des revendications.

Ainsi, la technique proposée permet de gérer la transaction directement au sein du terminal du client. Il n'est donc pas nécessaire de fournir au commerçant les identifiant privés de l'utilisateur. Ceux-ci n'étant pas fourni au commerçant, il n'y a pas de risque qu'une compromission du dispositif du commerçant entraine une compromission des données du client. Inversement, il n'y a pas de risque que le commerçant soit compromis par le dispositif du client.

Ainsi, à la différence d'autres techniques, la technique de l'invention assure que la transaction (donc le paiement) est réalisée en mode « card present » (carte présente), c'est-à-dire comme si une carte bancaire avait été insérée dans le terminal du commerçant.

Selon une implémentation , les différentes étapes des procédés selon l'invention sont mises en œuvre par un ou plusieurs logiciels ou programmes d'ordinateur, comprenant des instructions logicielles destinées à être exécutées par un processeur de données d'un module relais selon l'invention et étant conçu pour commander l'exécution des différentes étapes des procédés.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en œuvre ses propres modules logiciels.

Les différents modes de réalisation mentionnés ci-dessus sont combinables entre eux pour la mise en œuvre de l'invention.

### 4. Liste des figures

D'autres caractéristiques et avantages de l'invention apparaîtront plus clairement à la lecture de la description suivante d'un mode de réalisation, et des dessins annexés, parmi lesquels :

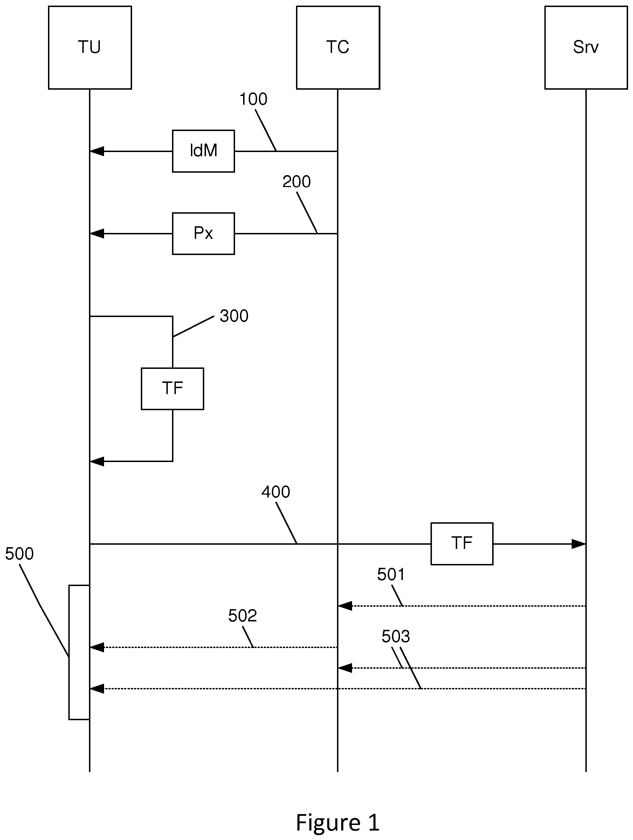

- la figure 1 présente un synoptique de la technique proposée ;
- la figure 2 décrit un dispositif pour la mise en œuvre de la technique proposée ;
- la figure 3 décrit un serveur de gestion de transaction.

### 5. Description

### 5.1. Rappel du principe général de l'invention

Le principe général de l'invention repose sur une inversion de paradigme pour ce qui est du paiement. Plus particulièrement, le paiement par carte bancaire à puce (ou carte sans contact, ou téléphone avec fonction de paiement), tel qu'il est couramment réalisé suppose que le commerçant chez qui on souhaite réaliser le paiement dispose d'un équipement spécifique permettant de réaliser le paiement. Ceci suppose également que le client fournisse un identifiant (par l'intermédiaire d'une carte bancaire [à puce, à bande magnétique, sans contact], d'un terminal) et que le commerçant se charge de réaliser une authentification du client en fonction du matériel qui lui est présenté par le client.

Dans la technique proposée, un terminal en possession du client (terminal qui peut être un téléphone, un smartphone, un PDA une tablette, un ordinateur portable ou tout autre dispositif apte à gérer une transaction) est utilisé pour générer et transmettre la transaction financière à un serveur de gestion de transaction (comme un serveur bancaire ou un serveur de prestataire de services de paiement par exemple). Le commerçant n'utilise plus les coordonnées du client. A l'inverse, le client utilise les coordonnées du commerçant.

Ceci présente de nombreux avantages, parmi lesquels l'assurance que les données du client ne seront pas volées ou compromises. En effet, dans la mesure où l'on considère que les données du commerçant peuvent être des données publiques et que l'opération financière est une opération à destination du commerçant (opération de crédit pour le commerçant), il n'est pas nécessaire que le commerçant donne son accord pour recevoir un crédit de la part de l'utilisateur. Les données du commerçant ne sont donc pas compromises. De plus, comme le client ne fournit pas ses propres donnés au commerçant, la méthode proposée assure que les données du client ne seront pas exploitées contre son consentement (par vol, usurpation d'identité, etc.). Ainsi, ni le commerçant, ni le client n'ont fourni de données sensibles. Par ailleurs, la technique proposée présente l'avantage d'utiliser les infrastructures existantes au niveau du commerçant. En effet, celui-ci possède déjà, en règle générale, un terminal qui permet de recevoir des données de la part d'un ou plusieurs serveurs bancaires. L'avantage de la méthode proposée est que le terminal du commerçant n'est plus responsable de la construction de la transaction, et qu'il se contente de recevoir des données de la part d'un serveur (et/ou d'un autre terminal).

Par la suite, on présente un exemple de réalisation de l'invention dans lequel le principe présenté est mis en œuvre. Il est entendu que la mise en œuvre du principe proposée n'est pas limitative et que toute autre méthode mettant en œuvre ce principe entre dans le cadre de la présente divulgation.

### 5.2. Description d'un exemple de réalisation

Dans cet exemple de réalisation, on décrit un procédé permettant à un client de réaliser une transaction financière (par exemple un achat) auprès d'un commerçant. Le système décrit présente l'énorme avantage d'une part de bénéficier des infrastructures existantes et d'autres part d'assurer que la transaction est réalisée en mode « card present » (carte présente), puisque la technique, dans cet exemple de réalisation, nécessite la saisie, par l'utilisateur, d'un une donnée représentative d'un identifiant personnel de sécurisation (par exemple d'un code PIN). Ce code PIN est associé, à volonté, soit à une carte de paiement, dissociée du terminal de l'utilisateur, soit directement au terminal de l'utilisateur lui-même (lorsque ce terminal comprend par exemple une carte de paiement ou un module de paiement intégré dans le terminal).

Dans cet exemple de réalisation, le procédé comprend, au sein d'un terminal détenu par un utilisateur (TU) souhaitant effectuer une transaction financière auprès d'un commerçant (lequel possède un dispositif pouvant être assimilé à un terminal commerçant (TC) qui comprend éventuellement des fonctions réduites) :
- une étape de réception (100) d'un identifiant de commerçant (IdM) ;
- une étape d'obtention réception (200) d'une donnée représentative d'un montant de transaction (Px) ;
- une étape de génération (300), par le terminal de l'utilisateur, au profit dudit commerçant, d'une transaction (TF) à destination d'un serveur de gestion de transaction (Srv) ;
- une étape de transmission (400) de ladite transaction (TF) audit serveur de transaction (Srv).

La réception de l'identifiant du commerçant et de l'identifiant du prix ets subséquente soit à une transmission directe de ces données à partir du terminal du commerçant vers le terminal, soit à une transmission indirecte, impliquant le serveur de gestion de transaction. Dans ce cas c'est le serveur de gestion de transaction qui transmet directement ces données au terminal utilisateur TU. Dans ce deuxième cas de figure, l'utilisateur est déjà connecté au serveur de gestion de transaction et valide la transaction avec celui-ci, par exemple suite à la saisie d'un code PIN par l'utilisateur : l'étape de génération de la transaction comprend alors la saisie d'un code PIN par l'utilisateur, comme explicité préalablement) et la transaction est transmise au serveur. Ainsi, la transaction (TF) qui est transmise au serveur peut, dans cet exemple de réalisation, n'être qu'une confirmation (il s'agit par exemple d'une confirmation sous forme de hash de transaction, ledit hash étant bâti à partir de l'identifiant du commerçant, du prix et de l'identifiant du client).

Ainsi, le commerçant fourni en quelque sorte un identifiant « public » avec lequel il souhaite que la transaction dont le terminal du client a la charge soit réglée. Dans un mode de réalisation non couvert par l'invention revendiqué, l'identifiant fourni par le commerçant permet uniquement de réaliser de transactions de crédit vers un compte ouvert à destination du commerçant.

Une fois la transaction transmise au serveur de gestion de transaction (serveur bancaire ou serveur de prestataire de services de paiement), celle-ci est validée (500). Cette validation peut prendre plusieurs formes distinctes : soit une transmission (501) au terminal du commerçant (TC), qui retransmet au terminal du client (502). Il peut aussi s'agir d'une transmission directe, par le serveur de gestion de transaction, aux deux terminaux (ceci permet d'éviter les soupçons de fraude pouvant peser sur la transaction) : le serveur de gestion de transaction joue alors le rôle de tiers de confiance pour la réalisation de la transaction. Bien entendu, cette validation ne se limite pas à ces seules étapes de transmission aux terminaux, comme cela sera explicité par la suite.

En fonction des modes de réalisation de la technique proposée, la réception de l'identifiant en provenance du commerçant peut comprendre l'une (voire plusieurs) des phases suivantes :
- une phase d'appairage, par exemple en utilisant le protocole bluetooth, comprenant l'obtention d'une donnée représentative de l'identifiant du commerçant;
- une phase de lecture d'un code à barre, par exemple d'un code à barre en deux dimensions, comprenant une donnée représentative de l'identifiant du commerçant ;
- une étape de réception, en provenance d'un serveur distant, d'une donnée représentative de l'identifiant du commerçant : il peut par exemple s'agir d'un serveur lié à une franchise ou un serveur de gestion de transaction ;
- dans un exemple de réalisation particulier, l'identifiant est obtenu par déchiffrage d'un code à barre, par exemple un code à barre en deux dimensions, (ou appairage bluetooth) délivrant une adresse auprès de laquelle le terminal de l'utilisateur peut obtenir un identifiant du commerçant ;
- La réception de cet identifiant peut également être réalisée par une carte sans contact, qui, lorsqu'elle est approchée du terminal de l'utilisateur, délivre l'identifiant du commerçant. La réception de cet identifiant peut également être réalisée par un terminal mobile en possession du commerçant lui-même qui échange des données avec le terminal de l'utilisateur.

En fonction des modes de réalisation de la technique proposée, l'obtention d'une donnée représentative d'un montant de transaction peut comprendre l'une (voire plusieurs) des phases suivantes :
- une saisie de l'utilisateur lui-même du montant de la transaction ;
- une phase d'appairage, par exemple en utilisant le protocole bluetooth, comprenant l'obtention d'une donnée représentative d'un montant de transaction ;
- une étape de lecture d'un code à barre, par exemple d'un code à barre en deux dimensions, comprenant d'un montant de transaction ;
- une étape de réception, en provenance d'un serveur distant, d'une donnée représentative d'un montant de transaction: il peut par exemple s'agir d'un serveur lié à une franchise ou un serveur de gestion de transaction ;
- dans un exemple de réalisation particulier, l'identifiant est obtenu par déchiffrage d'un code à barre, par exemple un code à barre en deux dimensions, (ou appairage bluetooth) délivrant une adresse auprès de laquelle le terminal de l'utilisateur peut obtenir d'un montant de transaction ;

En fonction des modes de réalisation, les étapes de réception précédentes peuvent être combinées en une seule et même étape.

Lorsque les données relatives au commerçant et au prix sont à disposition du terminal, celui-ci génère la transaction. Pour ce faire, plusieurs possibilités sont envisageables. La première consiste à générer, à l'aide d'une application particulière, un enregistrement spécifique comprenant d'une part les données précédemment obtenues et un identifiant de l'utilisateur. Accessoirement, cet enregistrement peut être chiffré afin de garantir l'intégrité des données qui seront transportées.

Lors de cette génération, le code PIN de l'utilisateur est requis, par l'intermédiaire d'une application spécifique de saisie de code PIN, laquelle requiert une action de saisie de la part de l'utilisateur. Ceci peut être réalisé à l'aide d'un clavier physique ou d'un clavier tactile. La transaction est donc réalisée en mode « card present ».

L'étape suivante consiste à transmettre, à partir du terminal du client, l'enregistrement à destination d'un serveur transactionnel (serveur de gestion de transaction). Le serveur transactionnel (qui est avantageusement un serveur d'un fournisseur de services de paiement ou un serveur bancaire), valide alors la transaction.

La validation de la transaction peut comprendre un certain nombre d'étapes, parmi lesquelles une étape de débit d'un compte de l'utilisateur et une étape de crédit d'une compte du commerçant.

Dans un exemple de réalisation spécifique, en plus de ces deux étapes (débit/crédit), la validation de la transaction par le serveur de gestion de transaction comprend préalablement :
- une étape de transmission, à destination d'un terminal en possession du commerçant, d'au moins une donnée représentative de la transaction, afin que celui-ci puisse s'assurer du montant de la transaction, et la valider (dans ce cas, il y a une étape de validation par le commerçant) ;
- une étape de réception, de la part d'un terminal en possession de l'utilisateur client, d'une donnée représentative d'une validation de la transaction par ledit commerçant.

Selon les modes de réalisation, la donnée représentative de la transaction reçue par le commerçant peut comprendre :
- une donnée représentative du montant de la transaction ;
- une donnée représentative du terminal utilisé par ledit utilisateur pour effectuer la transaction, par exemple la marque du terminal ;
- une donnée représentative de l'établissement de paiement sélectionné par l'utilisateur pour effectuer la transaction au profit du commerçant.

Lorsque le terminal du commerçant (TC) valide la transaction, par exemple par l'appui sur une touche de validation du terminal du commerçant, le terminal du client (TU) reçoit, en provenance du terminal du commerçant (TC) (par exemple si une connexion bluetooth a été construite) ou du serveur transactionnel (Serv), une donnée représentative de la validation de la transaction. Dans le même temps, le serveur transactionnel exécute les opérations de débit et de crédit nécessaires.

### 5.3. Autres caractéristiques et avantages

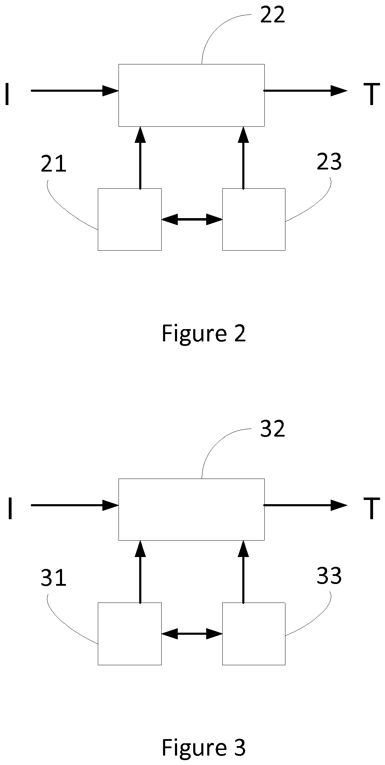

On décrit, en relation avec la figure 2, un terminal d'utilisateur mis en œuvre pour réaliser les transactions selon le procédé décrit préalablement.

Par exemple, le terminal comprend une mémoire 21 constituée d'une mémoire tampon, une unité de traitement 22, équipée par exemple d'un microprocesseur, et pilotée par le programme d'ordinateur 23, mettant en œuvre un procédé de construction de données représentatives de transaction.

À l'initialisation, les instructions de code du programme d'ordinateur 23 sont par exemple chargées dans une mémoire avant d'être exécutées par le processeur de l'unité de traitement 22. L'unité de traitement 22 reçoit en entrée au moins une donnée représentative d'un identifiant d'un commerçant et une donnée représentative d'un montant de transaction. Le microprocesseur de l'unité de traitement 22 met en œuvre les étapes du procédé de construction de données représentatives de transactions, selon les instructions du programme d'ordinateur 23 pour effectuer une validation de transaction.

Pour cela, le dispositif comprend, outre la mémoire tampon 21, des moyens de communications, tels que des modules de communication réseau, des moyens de transmission de donnée éventuellement un processeur de chiffrement.

Dans un exemple de réalisation particulier de l'invention, le terminal de l'utilisateur, pouvant être un Smartphone, une tablette, un ordinateur portable, un PDA, intègre des moyens de gestion de transaction tels que décrit précédemment. Ces moyens peuvent se présenter sous la forme d'un processeur particulier implémenté au sein du terminal, ledit processeur étant un processeur sécurisé. Selon un exemple de réalisation particulier, ce terminal met en œuvre une application particulière qui est en charge de la gestion des transactions, cette application étant par exemple fournie par le fabricant du processeur en question afin de permettre l'utilisation dudit processeur. Pour ce faire, le processeur comprend des moyens d'identification uniques. Ces moyens d'identification uniques permettent d'assurer l'authenticité du processeur.

Dans un autre exemple de réalisation, l'application de gestion installée sur le terminal comprend également d'identification uniques permettent soit d'assurer l'authenticité de l'application soit d'assurer l'identification du porteur du terminal, soit les deux.

### 5.4. Génération des données de facturation

La technique décrite se rapporte également à la génération et à la représentation des données à destination du terminal de l'utilisateur (identifiant du commerçant et identifiant du prix). Comme cela est explicitée préalablement, cette génération et cette représentation peut s'inscrire dans la cadre d'un paiement physique réalisé chez un commerçant physique.

Les données peuvent par exemple être représentées sous la forme d'un code en deux dimensions, tel qu'un code QR. Les données peuvent également être représentées par d'autres types de code.

Plus particulièrement dans un exemple de réalisation, les données sont imprimées sur papier, par exemple par l'intermédiaire d'un terminal à disposition du commerçant (terminal de paiement disposant d'une imprimante par exemple). Ces données sont ensuite lues par la caméra du terminal de l'utilisateur. Elles sont décodées puis interprétées pour générer la transaction au profit du commerçant, tel que cela est décrit préalablement.

Dans un autre exemple de réalisation, les données sont affichées, toujours sous la forme d'un code en deux dimensions, sur un écran d'un terminal à disposition du commerçant (par exemple le terminal de paiement du commerçant, ou une caisse enregistreuse intelligente). Ces données sont ensuite lues par la caméra du terminal de l'utilisateur. Elles sont décodées puis interprétées pour générer la transaction au profit du commerçant, tel que cela est décrit préalablement.

Selon les circonstances et en fonction de paramètres de mise en œuvre, l'acquisition des données peut être réalisée en deux étapes : la première pour l'acquisition de l'identifiant du commerçant, la deuxième pour l'acquisition du montant de la transaction. Ces deux étapes peuvent également être fusionnées en une seule et même étape d'acquisition, comme explicité précédemment.

### 5.5. Cas d'usage

La technique décrite peut être appliquée à de nombreuses situations différentes de la vie quotidienne. Elle permet de simplifier les relations entre le client et le consommateur tout en garantissant un échange de données minimum.

Par exemple, la méthode de l'invention peut être appliquée au paiement en ligne de biens ou services à partir d'un ordinateur : au lieu de requérir un paiement par carte bancaire « classique », qui nécessite la saisie d'un numéro de carte bancaire, d'une date de validité, le site de commerce en ligne peut afficher un code QR à l'écran, valide pendant une période de temps donnée, afin que le terminal de l'utilisateur ait le temps d'acquérir ce code. La suite du paiement est alors effectuée de la même manière que décrite précédemment. Le commerçant reçoit une notification de paiement en provenance de son établissement bancaire ou d'un prestataire de services de paiement.

Cette technique peut également être mise en œuvre lors de la diffusion de programmes audiovisuels à la télévision : par exemple, lors d'une page de publicité, un code QR est affiché sur l'écran de télévision, au moment de l'affichage de la publicité : une acquisition de ce code peut alors être réalisée par le terminal de l'utilisateur afin d'acquérir le bien ou le service en lien avec cette publicité. Dans ce cas, la confirmation de paiement reçue par l'annonceur peut être suivie d'une connexion au site de celui-ci afin que l'utilisateur puisse saisir des informations complémentaires, comme une adresse de livraison. En ce cas, le serveur intermédiaire (ou le serveur du prestataire de paiement) est en charge de la transmission, au terminal de l'utilisateur, d'une requête d'obtention de données complémentaires en provenance du commerçant.

Cette technique peut encore être mise en œuvre, de façon statique, pour permettre un achat direct de produit ou service, sans nécessité d'une intervention du commerçant : il suffit pour cela d'afficher un code QR correspondant à un produit (par exemple un menu dans une sandwicherie). Le client qui souhaite prendre ce menu effectue directement une reconnaissance du code QR. Ces données sont décodées puis interprétées pour générer la transaction au profit du commerçant, tel que cela est décrit préalablement. En sus, la donnée représentative de l'identifiant de l'utilisateur peut être complétée par la fourniture du nom de l'utilisateur, afin que le commerçant (par exemple la sandwicherie) soit en mesure de connaître l'identité de celui-ci. De manière alternative, le nom de l'utilisateur peut également être transmis par le prestataire de services de paiement auquel la transaction est transmise.

Ce type de cas d'usage peut être appliqué à de nombreuses autres situations comme le paiement dans une voiture , le paiement de carburant sur une pompe à essence, le paiement de friandise boissons et autre sandwich sur un distributeur automatique de nourriture, l'acquisition des données à partir d'une affiche publicitaire, d'un écran publicitaire dans un cinéma de quartier (par exemple pour payer une glace ou des friandises; ou encore mieux pour acquérir un bien physique chez un commerçant à côté du cinéma - un repas par exemple chez un restaurateur). Ces cas d'usage peuvent correspondre à des situations dans lesquelles le commerçant n'est pas physiquement présent au moment de la mise en œuvre de la transaction depuis le terminal de l'utilisateur.

Afin de renforcer la sécurité de telles transactions, qui peuvent être réalisées sans présence physique d'un commerçant, postérieurement à l'obtention des données d'identification de commerçant et d'identification du prix, le procédé comprend une étape d'émission, à destination du serveur de gestion (ou d'un autre serveur de collecte des produits et services associés à des commerçants), des données obtenues par l'intermédiaire du code QR scannées. Ces données, émises vers le serveur de gestion, peuvent être complétées par des données de localisations à disposition du terminal (par exemple par l'intermédiaire d'un GPS) et par une identification d'offre. Les données GPS permettent de situer l'offre tandis que l'identification de l'offre, qui est également une donnée du QR code, permettent de connaître le numéro de l'offre associée à ce commerçant.

Dans un mode de réalisation non couvert par l'invention revendiqué, cette étape est confondue avec l'étape de transmission (400) de la transaction (TF) à destination d'un serveur de gestion de transaction (Srv).

Sur réception de ces données, et préalablement à la mise en œuvre de la transaction, le serveur de gestion vérifie que les données qui lui sont transmises correspondent effectivement à une offre valide de paiement de bien et/ou de service. Dans cet mode de réalisation non couvert par l'invention revendiqué, ceci nécessite que les commerçants qui souhaitent faire des offres du type décrit précédemment sont dans l'obligation, pour que ces offres soient prises en compte, de les déclarer auprès du serveur de gestion (ou d'un autre serveur de collecte des produits et services associés à des commerçants) afin qu'ils ne soient pas considérés comme étant dépourvus de validité. La validité de l'offre peut être testée grâce à la localisation (GPS ou réseau mobile) du terminal. Dans ce cas, la base de données comprend également une identification du lieu de l'offre. Pour qu'elle soit valide, le lieu enregistré en base de données doit sensiblement correspondre au lieu d'emplacement du terminal de l'utilisateur. Le principe associé à l'identification de l'offre est le même. Lorsque cette donnée est prise en compte, la base de données comprend un prix associé à l'offre identifiée. Dans ce cas, le prix obtenu à partir du code QR est comparé au prix enregistré en base de données. Ceci permet de s'assurer qu'aucune fraude n'aura lieu sur le prix.

En cas de validité de l'offre, la transaction est poursuivie, comme décrit préalablement. En cas de caducité de l'offre, la transaction est annulée.

Selon une caractéristique particulière, l'invention se rapporte également à un code en deux dimensions, dit code QR. Selon l'invention, un tel code QR se différencie de l'art antérieur par la fait qu'il comprend d'une part un identifiant de commerçant et d'autre part un identifiant relatif à un prix de transaction. Selon une caractéristique particulière en fonction des modes de réalisation, un tel code comprend également un identifiant de produit et/ou de service. Un tel code peut également comprendre une localisation de vente de produit ou de service. Dans une version alternative, un tel code peut également comprendre une adresse à laquelle se connecter pour obtenir lesdites données.

### 5.6. Serveur de gestion de transaction

En fonction des modes de réalisation, le serveur de gestion de transaction (également appelé serveur transactionnel) est considéré comme un tiers de confiance dans la réalisation de la transaction.

Plus particulièrement, le serveur de gestion de transaction réalise les étapes suivantes :
- *reçoit* les transactions en provenance des terminaux des utilisateurs (ou les hash de transactions en fonction des modes de réalisations, voir préalablement) ;
- *contrôle* la validité des transactions reçues (validité formelle, se rapportant à la constitution de la transaction, à la conformité des clés de chiffrement utilisées, etc.) : cette étape consiste par exemple à déchiffrer la transaction et/ou à vérifier que le contenu de celle-ci correspond à des attentes formelles (longueur de champs, mode de codage des données) ; le déchiffrement peut consister peut être réalisé en utilisant une clé publique correspondant à l'utilisateur ou une clé privée propre au serveur ;
- *optionnellement vérifie* que les autorisations de paiement (ou délègue cette vérification à un autre serveur). L'obtention d'une telle autorisation permet de s'assurer que l'utilisateur dispose bien de la somme nécessaire au paiement (cette vérification peut être réalisée uniquement au-dessus d'un certain montant de paiement, par exemple 150,00 ou 300,00 €) et que les données utilisées pour le paiement ne sont pas volées (c'est-à-dire que les données n'ont pas été placée en état d'opposition) ;
- *effectue* (ou fait effectuer) les opérations de débit et de crédit sur les comptes bancaires des utilisateurs et des commerçants en fonction de leurs identifiants respectifs ;
- *transmet* à l'utilisateur et/ou au commerçant, des assertions de validation de transaction soit lorsque les autorisations nécessaires à la réalisation des transactions sont obtenues, soit sans ces autorisations si elles ne sont pas nécessaires.

En fonction des modes de réalisation, le serveur de gestion de transaction peut également prendre en charge d'autres aspects annexes. Ainsi, par exemple, le serveur de gestion de transaction peut également mettre en œuvre les étapes suivantes :
- *communique* avec le commerçant pour fournir à celui-ci le nom de l'utilisateur qui effectue une transaction donnée ; ceci est effectué sous la forme d'une étape de transmission du nom de l'utilisateur par exemple en même temps que la transmission de l'assertion de validation de la transaction :
- *reçoit* du commerçant, postérieurement à la validation de la transaction, une adresse (par exemple un adresse de type URL), auprès de laquelle l'utilisateur doit se connecter pour fournir au commerçant des données complémentaires ;
- *vérifie* la validité d'une offre, dans une base de données d'offres valides accessible depuis le serveur, ou auprès d'un ou plusieurs serveurs répertoriant les offres valides, par le biais de réception et de transmission de données (impliquant la transmission de l'identifiant du commerçant, du prix et optionnellement d'un identifiant de l'offre et/ou d'une localisation du terminal de l'utilisateur) ;
- *transmet* au terminal de l'utilisateur des données en provenance du commerçant.

On décrit, en relation avec la figure 3, un serveur de gestion mis en œuvre pour réaliser les transactions, du point de vue du serveur, selon le procédé décrit préalablement.

Par exemple, le serveur comprend une mémoire 31 constituée d'une mémoire tampon, une unité de traitement 32, équipée par exemple d'un microprocesseur, et pilotée par le programme d'ordinateur 33, mettant en œuvre un procédé de construction de données représentatives de transaction.

À l'initialisation, les instructions de code du programme d'ordinateur 33 sont par exemple chargées dans une mémoire avant d'être exécutées par le processeur de l'unité de traitement 32. L'unité de traitement 32 reçoit en entrée au moins une donnée représentative d'un identifiant d'un commerçant et une donnée représentative d'un montant de transaction et un identifiant d'utilisateur. Le microprocesseur de l'unité de traitement 32 met en œuvre les étapes du procédé de traitement de données représentatives de transactions, selon les instructions du programme d'ordinateur 33 pour effectuer une validation de transaction (contrôle de validité, vérification des autorisations, opérations de débits et de crédit, informations des intervenants).

Pour cela, le serveur comprend, outre la mémoire tampon 31, des moyens de communications, tels que des modules de communication réseau, des moyens de transmission de donnée et éventuellement un processeur de chiffrement.

Ces moyens peuvent se présenter sous la forme d'un processeur particulier implémenté au sein du serveur, ledit processeur étant un processeur sécurisé. Selon un exemple de réalisation particulier, ce serveur met en œuvre une application particulière qui est en charge de la réalisation des transactions, cette application étant par exemple fournie par le fabricant du processeur en question afin de permettre l'utilisation dudit processeur. Pour ce faire, le processeur comprend des moyens d'identification uniques. Ces moyens d'identification uniques permettent d'assurer l'authenticité du processeur.

Par ailleurs, le serveur comprend en outre les moyens d'identification et de validation des offres de produits et de services. Ces moyens se présentent également comme des interfaces de communications permettant d'échanger des données sur des réseaux de communication, des moyens d'interrogations et de mise à jour de base de données, des moyens de comparaisons de données de localisation.

## Revendications

1. Procédé de réalisation d'une transaction financière avec un terminal d'un commerçant (TC), procédé mis en œuvre au sein d'un terminal d'un utilisateur désirant effectuer une transaction auprès d'un commerçant, le procédé étant mis en œuvre par le terminal d'un utilisateur et étant **caractérisé en ce qu'**il comprend :
- une étape de réception (100) d'un identifiant de commerçant (IdM) :
- par lecture d'un code à barre au moyen d'une caméra du terminal d'un utilisateur ; ou
- par réception d'un message au travers d'une interface Bluetooth du terminal d'un utilisateur, ou
- par réception d'un message au travers d'une interface sans contact du terminal d'un utilisateur, ou
- réception, en provenance d'un serveur distant, d'une donnée représentative de l'identifiant du commerçant ;
- une étape de réception (200) d'une donnée représentative d'un montant de transaction (Px) comprenant :
- lecture d'un code à barre au moyen d'une caméra du terminal d'un utilisateur ; ou
- réception d'un message au travers d'une interface Bluetooth du terminal d'un utilisateur ; ou
- réception, en provenance d'un serveur distant, d'une donnée représentative d'un montant de transaction ;
- une étape de génération (300), par le terminal de l'utilisateur, au profit dudit commerçant, d'une transaction (TF) comprenant :
- l'obtention de données de localisation du terminal d'un utilisateur au moyen d'un GPS ou d'un réseau mobile,
- la création d'un enregistrement comprenant d'une part ledit identifiant de commerçant (IdM), la donnée représentative d'un montant de transaction (Px), une donnée représentative d'un identifiant de l'utilisateur, les données de localisation du terminal d'un utilisateur ;
- une étape de transmission (400) de ladite transaction (TF) à destination d'un serveur de gestion de transaction (Srv) pour réaliser la transaction avec le terminal du commerçant sur un compte bancaire de l'utilisateur, dans lequel le serveur de gestion des transactions auquel la transaction est transmise vérifie la validité de la transaction au moyen d'une base de données, maintenue par ledit serveur de gestion de transaction (Srv), comprenant une donnée représentative de montant de transaction et une identification d'une localisation de vente,
- une étape de réception d'au moins une assertion de validation de la transaction transmise par le serveur de gestion de transaction (Srv), après que celui-ci ait vérifié la validité de la transaction et mis en œuvre la transaction.

2. Procédé selon la revendication 1, **caractérisé en ce que** ladite étape de génération (300) de ladite transaction (TF) comprend une étape de saisie, par ledit utilisateur, d'au moins une donnée représentative d'un identifiant personnel de sécurisation.

3. Procédé selon la revendication 1, **caractérisé en ce que** ledit procédé comprend, postérieurement à ladite étape de transmission, une étape de réception d'une donnée représentative d'une validation de ladite transaction en provenance d'un terminal dudit commerçant (TC).

4. Procédé selon la revendication 1, **caractérisé en ce que** ladite étape de réception (100) d'un identifiant de commerçant (IdM) comprend une phase d'appairage avec le terminal dudit commerçant (TC) comprenant une étape d'obtention de ladite donnée représentative de l'identifiant du commerçant (Idm).

5. Procédé selon la revendication 1, **caractérisé en ce que** ladite étape de génération (300) d'une transaction (TF) comprend :
- une étape de création de l' enregistrement comprenant en outre une donnée représentative d'un identifiant de l'utilisateur ;
- une étape de chiffrement dudit enregistrement à l'aide dudit terminal dudit utilisateur, délivrant ladite transaction (TF).

6. Dispositif de réalisation d'une transaction financière avec un terminal d'un commerçant (TC), dispositif mis en œuvre au sein d'un terminal d'un utilisateur, dispositif **caractérisé en ce qu'**il comprend :
- au moins l'une des interfaces suivantes : une caméra, une interface Bluetooth, ou une interface sans contact,
- des moyens de réception (100) d'un identifiant de commerçant (IdM) par :
- lecture d'un code à barre au moyen de la caméra ;
- réception d'un message au travers de l'interface Bluetooth du terminal d'un utilisateur, ou
- réception d'un message au travers de l'interface sans contact du terminal d'un utilisateur, ou
- réception, en provenance d'un serveur distant, d'une donnée représentative de l'identifiant du commerçant ;
- des moyens de réception (200), d'une donnée représentative d'un montant de transaction (Px) comprenant :
- lecture d'un code à barre au moyen d'une caméra du terminal d'un utilisateur ; ou
- réception d'un message au travers d'une interface Bluetooth du terminal d'un utilisateur ; ou
- réception, en provenance d'un serveur distant, d'une donnée représentative d'un montant de transaction ;
- des moyens de génération (300), par le terminal de l'utilisateur, au profit dudit commerçant, d'une transaction (TF) permettant :
- l'obtention de données de localisation du terminal d'un utilisateur au moyen d'un GPS ou d'un réseau mobile,
- la création, d'un enregistrement comprenant d'une part ledit identifiant de commerçant (IdM), la donnée représentative d'un montant de transaction (Px), une donnée représentative d'un identifiant de l'utilisateur, les données de localisation du terminal d'un utilisateur ;
- des moyens de transmission (400) de ladite transaction (TF) à destination d'un serveur de gestion de transaction (Srv) pour réaliser la transaction avec le terminal du commerçant sur un compte bancaire de l'utilisateur, dans lequel le serveur de gestion des transactions auquel la transaction est transmise vérifie la validité de la transaction au moyen d'une base de données, maintenue par ledit serveur de gestion de transaction (Srv), comprenant une donnée représentative de montant de transaction et une identification d'une localisation de vente,
- des moyens de réception moins une assertion de validation de la transaction transmise par le serveur de gestion de transaction (Srv) après que celui-ci ait vérifié la validité de la transaction et mis en œuvre la transaction.

7. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé de réalisation de transaction selon la revendication 1, lorsqu'il est exécuté sur un ordinateur.

## Patentansprüche

1. Verfahren zum Ausführen einer Finanztransaktion mit einem Endgerät eines Händlers (TC), Verfahren, das in einem Endgerät eines Nutzers umgesetzt wird, der eine Transaktion bei einem Händler ausführen möchte, wobei das Verfahren von dem Endgerät eines Nutzers umgesetzt wird und **dadurch gekennzeichnet ist, dass** es aufweist:
- einen Schritt des Empfangens (100) einer Händlerkennung (IdM):
- durch Lesen eines Strichcodes mit Hilfe einer Kamera des Endgeräts eines Nutzers oder
- durch Empfangen einer Nachricht über eine Bluetooth-Schnittstelle des Endgeräts eines Nutzers oder
- durch Empfangen einer Nachricht über eine kontaktlose Schnittstelle des Endgeräts eines Nutzers oder
- Empfangen von einem Remote-Server einer Dateneinheit, die für die Kennung des Händlers repräsentativ ist,
- einen Schritt des Empfangens (200) einer Dateneinheit, die für einen Transaktionsbetrag (Px) repräsentativ ist, umfassend:
- Lesen eines Strichcodes mit Hilfe einer Kamera des Endgeräts eines Nutzers oder
- Empfangen einer Nachricht über eine Bluetooth-Schnittstelle des Endgeräts eines Nutzers oder
- Empfangen von einem Remote-Server einer Dateneinheit, die für einen Transaktionsbetrag repräsentativ ist,
- einen Schritt des Generierens (300) einer Transaktion (TF) durch das Endgerät des Nutzers zu Gunsten des Händlers, umfassend:
- das Erhalten von Positionsdaten des Endgeräts eines Nutzers mittels eines GPS oder über ein Mobilfunknetz,
- das Erstellen einer Aufzeichnung, umfassend einerseits die Händlerkennung (IdM), die Dateneinheit, die für einen Transaktionsbetrag (Px) repräsentativ ist, eine Dateneinheit, die für eine Kennung des Nutzers repräsentativ ist, die Positionsdaten des Endgeräts eines Nutzers,
- einen Schritt des Übertragens (400) der Transaktion (TF) an einen Transaktionsverwaltungsserver (Srv) zum Durchführen der Transaktion mit dem Endgerät des Händlers auf einem Bankkonto des Nutzers, wobei der Transaktionsverwaltungsserver, an den die Transaktion übertragen wird, die Gültigkeit der Transaktion mittels einer Datenbank überprüft, die von dem Transaktionsverwaltungsserver (Srv) gehalten wird, umfassend eine Dateneinheit, die für den Transaktionsbetrag repräsentativ ist, und eine Kennung eines Verkaufsorts,
- einen Schritt des Empfangens mindestens einer Validierungsbestätigung der Transaktion, die vom Transaktionsverwaltungsserver (Srv) übertragen wird, nachdem dieser die Gültigkeit der Transaktion überprüft und die Transaktion umgesetzt hat.

2. Verfahren nach Anspruch 1, **dadurch gekennzeichnet, dass** der Schritt des Generierens (300) einer Transaktion (TF) einen Schritt des Eingebens einer Dateneinheit durch den Nutzer von mindestens einer Dateneinheit, die für eine persönliche Sicherheitskennung repräsentativ ist, aufweist.

3. Verfahren nach Anspruch 1, **dadurch gekennzeichnet, dass** das Verfahren nach dem Schritt des Übertragens einen Schritt des Empfangens einer Dateneinheit aufweist, die für eine Validierung der Transaktion von einem Endgerät des Händlers (TC) repräsentativ ist.

4. Verfahren nach Anspruch 1, **dadurch gekennzeichnet, dass** der Schritt des Empfangens (100) einer Händlerkennung (IdM) eine Pairing-Phase mit dem Endgerät des Händlers (TC) aufweist, die einen Schritt des Erhaltens der Dateneinheit, die für die Kennung des Händlers (Idm) ist, aufweist.

5. Verfahren nach Anspruch 1, **dadurch gekennzeichnet, dass** der Schritt des Generierens (300) einer Transaktion (TF) aufweist:
- einen Schritt des Erstellens der Aufzeichnung, ferner umfassend eine Dateneinheit, die für eine Kennung des Nutzers repräsentativ ist,
- einen Schritt des Verschlüsseins der Aufzeichnung mit Hilfe des Endgeräts des Nutzers, der die Transaktion (TF) bereitstellt.

6. Vorrichtung zum Ausführen einer Finanztransaktion mit einem Endgerät eines Händlers (TC), Vorrichtung, die in einem Endgerät eines Nutzers eingesetzt wird, Vorrichtung, die **dadurch gekennzeichnet ist, dass** sie aufweist:
- mindestens eine der folgenden Schnittstellen: eine Kamera, eine Bluetooth-Schnittstelle oder eine kontaktlose Schnittstelle,
- Mittel zum Empfangen (100) einer Händlerkennung (IdM) durch:
- Lesen eines Strichcodes mit Hilfe der Kamera,
- Empfangen einer Nachricht über die Bluetooth-Schnittstelle des Endgeräts eines Nutzers oder
- Empfangen einer Nachricht über die kontaktlose Schnittstelle des Endgeräts eines Nutzers oder
- Empfangen von einem Remote-Server einer Dateneinheit, die für die Kennung des Händlers repräsentativ ist,
- Mittel zum Empfangen (200) einer Dateneinheit, die für einen Transaktionsbetrag (Px) repräsentativ ist, umfassend:
- Lesen eines Strichcodes mit Hilfe einer Kamera des Endgeräts eines Nutzers oder
- Empfangen einer Nachricht über eine Bluetooth-Schnittstelle des Endgeräts eines Nutzers oder
- Empfangen von einem Remote-Server einer Dateneinheit, die für einen Transaktionsbetrag repräsentativ ist,
- Mittel zum Generieren (300) einer Transaktion (TF) durch das Endgerät des Nutzers zu Gunsten des Händlers, wodurch ermöglicht wird:
- das Erhalten von Positionsdaten des Endgeräts eines Nutzers mittels GPS oder über ein Mobilfunknetz,
- das Erstellen einer Aufzeichnung, umfassend einerseits die Händlerkennung (IdM), die Dateneinheit, die für einen Transaktionsbetrag (Px) repräsentativ ist, eine Dateneinheit, die für eine Kennung des Händlers repräsentativ ist, die Positionsdaten des Endgeräts eines Nutzers,
- Mittel zum Übertragen (400) der Transaktion (TF) an einen Transaktionsverwaltungsserver (Srv) zum Durchführen der Transaktion mit dem Endgerät des Händlers auf einem Bankkonto des Nutzers, wobei der Transaktionsverwaltungsserver, an den die Transaktion übertragen wird, die Gültigkeit der Transaktion mittels einer Datenbank überprüft, die von dem Transaktionsverwaltungsserver (Srv) gehalten wird, umfassend eine Dateneinheit, die für den Transaktionsbetrag repräsentativ ist, und eine Kennung eines Verkaufsorts,
- Mittel zum Empfangen mindestens einer Validierungsbestätigung der Transaktion, die vom Transaktionsverwaltungsserver (Srv) übertragen wird, nachdem dieser die Gültigkeit der Transaktion überprüft und die Transaktion umgesetzt hat.

7. Computerprogrammprodukt, das von einem Kommunikationsnetz herunterladbar ist und/oder auf einem computerlesbaren Medium gespeichert und/oder von einem Mikroprozessor ausführbar ist, **dadurch gekennzeichnet, dass** es Programmcodebefehle für die Ausführung eines Verfahrens zum Ausführen einer Finanztransaktion nach Anspruch 1 aufweist, wenn es auf einem Computer ausgeführt wird.

## Claims

1. Method for carrying out a financial transaction with a Merchant Terminal (TC), method implemented within a terminal of a user wishing to carry out a transaction with a merchant, the method being processed the terminal of the user and **characterized in that** it comprises:
- a step (100) for receiving a merchant's identifier (IdM):
- by reading a barcode with a camera of the terminal of the user; or
- By receiving a message thru a Bluetooth interface of the terminal of the user; or
- By receiving a message thru a contactless interface of the terminal; or
- By receiving, from a remote server, a piece of data representing the merchant's identifier;
- a step (200) for receiving a piece of data representing a transaction amount (Px), comprising:
- reading a barcode with a camera of the terminal of the user; or
- receiving a message thru a Bluetooth interface of the terminal of the user; or
- receiving, from a remote server, a piece of data representing the transaction amount;
- a step (300) for generating a transaction (TF), by means of the user's terminal, for said merchant comprising:
- obtaining location data of said user's terminal with a GPS or a mobile network;
- creating a record comprising the merchant's identifier, the piece of data representing the transaction amount, a piece of data representing an identifier of the user, location data of said user's terminal;
- a step (400) for transmitting said transaction (TF) to a transaction management server (Srv), for processing the transaction with the merchant's terminal on a bank account of the user, in which said transaction management server to which the transaction is transmitted checks the validity of the transaction with a database, maintained by the transaction management server (Srv), comprising a piece of data representing the transaction amount and an identification of a selling location;
- a step for receiving at least one assertion of validation of the transaction transmitted by the transaction management server (Srv), after it has checked the validity of the transaction and processed the transaction.

2. Method according to claim 1, **characterized in that** said step (300) for generating said transaction (TF) comprises a step for the entry, by said user, of at least one piece of data representing a personal securing identifier.

3. Method according to claim 1, **characterized in that** said method comprises, subsequently to said step for transmitting, a step for receiving a piece of data representing a validation of said transaction coming from a terminal of said merchant (TC).

4. Method according to claim 1, **characterized in that** said step (100) for receiving a merchant's identifier (IdM) comprises a phase of pairing with a terminal of said merchant (TC) comprising a step for obtaining said piece of data representing the merchant's identifier (IdM).

5. Method for building data according to claim 1, **characterized in that** said step (300) for generating a transaction (TF) comprises:
- a step for creating a specific recording comprising said merchant's identifier (IdM), said piece of data representing a transaction amount and a piece of data representing an identifier of the user;
- a step for encrypting said recording by means of said terminal of said user, delivering said transaction (TF).

6. Device for carrying out a financial transaction with a Merchant Terminal (TC), device implemented within a user's terminal, device **characterized in that** it comprises:
- At least one of the following interfaces: a camera, a Bluetooth interface or a contactless interface;
- means for receiving (100) a merchant's identifier (IdM) by:
- reading a barcode with the camera; or
- receiving a message thru the Bluetooth interface; or
- receiving a message thru the contactless interface; or
- receiving, from a remote server, a piece of data representing the merchant's identifier;
- means for receiving (200) a piece of data representing an amount of a transaction (Px) comprising:
- reading a barcode with a camera of the terminal of the user; or
- receiving a message thru a Bluetooth interface of the terminal of the user; or
- receiving, from a remote server, a piece of data representing the transaction amount;
- means for generating (300) a transaction, by means of the user's terminal, for said merchant allowing:
- obtaining location data of said user's terminal with a GPS or a mobile network;
- creating a record comprising the merchant's identifier, the piece of data representing the transaction amount, a piece of data representing an identifier of the user, location data of said user's terminal;
- means for transmitting (400) said transaction to a transaction management server (Srv), for processing the transaction with the merchant's terminal on a bank account of the user, in which said transaction management server to which the transaction is transmitted checks the validity of the transaction with a database, maintained by the transaction management server (Srv), comprising a piece of data representing the transaction amount and an identification of a selling location;
- a step for receiving at least one assertion of validation of the transaction transmitted by the transaction management server (Srv), after it has checked the validity of the transaction and processed the transaction.

7. Computer program product downloadable from a communications network and/or stored on a computer-readable carrier and/or executable by a microprocessor, **characterized in that** it comprises program code instructions for executing a method for carrying out a transaction according to claim 1, when it is executed on a computer.
